(19) **Europäisches Patentamt**
**European Patent Office**
**Office européen des brevets**

(11) **EP 3 464 680 B1**

(12) **FASCICULE DE BREVET EUROPEEN**

(45) Date de publication et mention
de la délivrance du brevet:
**01.07.2020 Bulletin 2020/27**

(21) Numéro de dépôt: **17731615.5**

(22) Date de dépôt: **24.05.2017**

(51) Int Cl.:
*C23C 18/12* *(2006.01)*        *B65D 23/02* *(2006.01)*
*C09D 183/04* *(2006.01)*      *C09D 183/08* *(2006.01)*
*C08G 77/04* *(2006.01)*        *C08G 77/24* *(2006.01)*

(86) Numéro de dépôt international:
**PCT/FR2017/051301**

(87) Numéro de publication internationale:
**WO 2017/203181 (30.11.2017 Gazette 2017/48)**

(54) **PROCEDE DE FABRICATION D'UNE COUCHE DE REVETEMENT DE LA FACE INTERNE EN MATIERE PLASTIQUE D'UN RECIPIENT ET RECIPIENT OBTENU AVEC UN TEL PROCEDE**

VERFAHREN ZUR HERSTELLUNG EINER SCHICHT ZUM BESCHICHTEN DER KUNSTSTOFFINNENFLÄCHE EINES BEHÄLTERS UND NACH EINEM DERARTIGEN VERFAHREN HERGESTELLTER BEHÄLTER

METHOD FOR THE PRODUCTION OF A LAYER FOR COATING THE PLASTIC INNER SURFACE OF A RECEPTACLE, AND RECEPTACLE OBTAINED BY A METHOD OF SAID TYPE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.05.2016 FR 1654712**

(43) Date de publication de la demande:
**10.04.2019 Bulletin 2019/15**

(73) Titulaire: **Glass Surface Technology**
**75015 Paris (FR)**

(72) Inventeurs:
• **WAGNER, Christophe**
**87320 Bussiere-Poitevine (FR)**

• **MARSAL, Alexis**
**87000 Limoges (FR)**

(74) Mandataire: **Benech, Frédéric**
**Cabinet Benech**
**15, rue d'Astorg**
**75008 Paris (FR)**

(56) Documents cités:
**FR-A1- 2 443 484        FR-A1- 2 921 931**
**FR-A1- 2 935 594        FR-A1- 2 939 615**
**US-A1- 2013 035 400**

**EP 3 464 680 B1**

**Description**

La présente invention concerne un procédé de fabrication d'une couche de revêtement de la face interne d'un récipient au moins en partie en matière plastique.

Elle concerne également un récipient obtenu avec un tel procédé.

Par fabrication d'une couche de revêtement de la face interne d'un récipient, on entend la fabrication d'une solution de recouvrement formant, après gélification puis solidification, une couche de matériau protecteur, ainsi que le recouvrement proprement dit c'est-à-dire l'apposition superficielle d'une telle solution sur la surface d'un objet formé d'un autre matériau, pour créer après gélification et durcissement cette couche de protection de façon solidaire et durable (c'est à dire supérieure à plusieurs années). Un tel revêtement modifie alors les propriétés de surface, physiques et/ou chimiques de cet autre matériau (quand il rentre en contact avec un produit).

Par matière plastique on entend tout matériau issu de la polymérisation notamment de produit pétrolier et en particulier les flacons en polyéthylène, ou plus généralement tout flacon, pot, tube ou poche souple utilisés de façon biocompatible avec l'homme ou l'animal.

L'invention trouve une application particulièrement importante bien que non exclusive dans le domaine de la fabrication de flacons en matière plastique destinés à recevoir et conserver des produits agroalimentaires, pharmaceutiques ou cosmétiques.

Elle permet notamment de minimiser les interactions contenant-contenu, et/ou environnement-contenu, et ce plus particulièrement pour le stockage nécessitant la conservation de produits de façon neutre pendant un temps assez long (par exemple plusieurs mois).

Classiquement on entend par support neutre un support qui effectue dans le temps, un relargage d'ions en très faible quantité.

Par très faible quantité on entend notamment des pics de présence après extraction nettement inférieurs à la référence sans traitement, par exemple deux à dix fois inférieurs, en mesurant les extractibles par chromatogrpahie en phase gazeuse couplée à la spectrométrie de masse (GS-MS).

Des études ont en effet montré que certains éléments présents dans le flacon pouvaient migrer dans le contenu en particulier quand l'emballage est soumis à des hautes températures.

Il s'ensuit une contamination pouvant causer des effets dangereux sur un produit pharmaceutique, du fait de réactions inacceptables qui pourraient se produire entre la paroi et le produit.

On connaît déjà (FR 2 935 594) des moyens de recouvrir au moins une fraction de la surface par un matériau vitreux élaboré selon un procédé connu de l'homme du métier sous la dénomination Sol-gel (Diminutif de Solution - Gélification).

Le matériau vitreux, à base de silice, est obtenu sans fusion, par polymérisation d'au moins un précurseur moléculaire.

Il comprend une étape de synthèse effectuée à partir d'alcoolates de formule $M(OR)_n$, où M est un métal ou le silicium, et R un groupement organique alkyle $C_nH_{2n+1}$ dissout dans un solvant usuel, puis une étape plus ou moins longue de gélification avec évaporation du solvant jusqu'à solidification complète.

Un tel procédé Sol-Gel est néanmoins de mise en œuvre particulièrement complexe et délicate dans un récipient fermé.

Il présente de plus les inconvénients suivants :
Il laisse tout d'abord une acidité résiduelle sur le support lors de l'utilisation des acides classiquement choisis comme l'acide acétique ou l'acide chlorhydrique, qui peut modifier le comportement chimique et/ou la perception olfactive des produits contenus dans le flacon.

Mais de plus et surtout ce procédé n'a pas identifié le problème de la barrière et de ce fait n'a pas recherché ni ne permet pas d'augmenter la résistance hydrolytique de façon suffisante, car générant un revêtement trop poreux et/ou laissant des zones mal protégées (trous) sur la partie de surface concernée, où le dépôt est réalisé.

Avec un tel procédé, on constate en effet que l'efficacité de la fonction de barrière aux relargages et aux phénomènes d'exsudations, se détériore dans le temps avec des cinétiques trop rapides pour les contraintes de durée de conservation notamment pour les applications en parfumerie.

Ce type de procédé est en général également et spécifiquement adapté à un type de matériau constitutif du récipient en verre, et ne peut véritablement être extrapolé au plastique, même si cette matière est mentionnée de façon théorique en n'étant de ce fait pas spécifiquement écartée en tant que telle par l'art antérieur.

En résumé on observe notamment que les procédés connus, qui utilisent des acides forts tels que l'acide chlorhydrique (HCl), naturellement privilégiés par l'homme du métier pour la préparation de solutions réactives et l'augmentation de la cinétique des réactions, d'une part présentent l'inconvénient de laisser passer une quantité résiduelle d'acide perturbatrice à terme de la qualité et de l'odeur du produit et/ou parfum, et d'autre part n'assurent pas de manière optimale une barrière vis à vis de la paroi du récipient entraînant des relargages dans le produit contenu.

La présente invention permet de pallier ces inconvénients, notamment en ce qu'elle permet de traiter des

2

flacons en matière plastique, en ce qu'elle améliore de manière importante les résistances hydrolytiques en générant un véritable effet barrière, c'est-à-dire une imperméabilité ou étanchéité aux produits extractibles de la paroi du récipient, en ce qu'elle optimise l'accroche de la couche à la paroi interne du récipient, en ce qu'elle permet de fonctionnaliser la couche sans le faire au détriment des résistances hydrolytiques, mécaniques, thermiques et chimiques de la couche et en ce qu'elle permet de fonctionner en milieu confiné avec par exemple application par un pulvérisateur.

L'invention permet également d'obtenir des couches figées d'une épaisseur plus importante, plus uniforme et de bonnes cinétiques de réaction sur le plan industriel tout en proposant des températures de traitement inférieur à 100°C.

Or les procédés de l'art antérieur prévoient des traitements thermiques incluant toujours des valeurs de températures > 120°C, 150°C, etc ..., jugées nécessaires par l'homme du métier, pour obtenir un résultat suffisant.

Avec l'invention, le rendu esthétique final de la couche est amélioré en réduisant de manière significative les craquelures et bosselures de la couche et ce de manière durable dans le temps, ce qui est crucial dans le domaine du luxe et de la parfumerie.

En résumé, l'invention permet l'obtention d'une couche assurant une barrière neutre, imperméable aux rayonnements et aux espèces chimiques et ce dans les deux sens de traversée de la couche.

La présente invention a donc notamment pour objet de mettre en œuvre ces principes avec les avantages ci-dessus mentionnés.

La formulation de la solution doit de plus permettre d'obtenir une viscosité permettant l'application aisée de la solution tout en permettant une cinétique de gélification limitant les effets des bavures lors de l'application, tout en permettant une bonne stabilité dans le temps, ne laissant pas de craquelures dans la couche appliquée après séchage et/ou cuisson.

Ils nécessitent de plus en général l'utilisation d'acide ou de base de manière à activer, c'est-à-dire préparer l'état de surface de la surface interne destinée à être recouverte.

Ces acides, aux pH envisagés, sont des produits très actifs, voire dangereux pour le manipulateur et pour le récipient.

Les réactifs de l'art antérieur utilisables avec de tels procédés sont par ailleurs peu disponibles sur le marché et/ou chers, nécessitent des procédures de sécurité contraignantes et imposent des limitations en terme de température, de temps de traitement et de matériaux utilisables.

De plus les acides utilisés ne sont pas évacuables facilement dans un milieu confiné et ne sont pas éliminés assez efficacement quand on monte en température.

Avec un support plastique la couche adhère mal, ne tient pas à la température et est plus fragile en cas d'agression chimique.

La plus grande souplesse du support peut par ailleurs entrainer des déformations lors de préhensions et/ou de sollicitations externes pouvant entrainer de ce fait un endommagement du revêtement ajouté.

La présente invention vise donc à fournir un procédé, et un récipient obtenu par un tel procédé, répondant mieux que ceux antérieurement connus aux exigences de la pratique, notamment en ce que en complément des éléments indiqués ci-dessus, elle ne demande pas impérativement la mise en œuvre de produits nocifs pour préparer la paroi interne du flacon ou du récipient avant traitement, en ce qu'elle ne nécessite dès lors pas de rinçage obligatoire avant et/ou après utilisation et en ce que, comme mentionné ci-dessus, elle permet de traiter tous les types de flacons en matière plastique, indépendamment des fournisseurs de ceux-ci et ce en engendrant moins d'endommagement des récipients que dans l'art antérieur et en ce qu'elle permet une bonne adhérence de la couche appliquée avec le support, ainsi qu'une protection optimisée formant une véritable couche barrière, le tout en fonctionnant en milieu confiné.

L'invention permet également d'obtenir de bonnes cinétiques de réaction sur le plan industriel pour des températures de traitement plus faibles que dans l'art antérieur, compatibles avec le support en matière plastique.

La présente invention a donc notamment pour objet de mettre en œuvre ces principes avec les avantages ci-dessus mentionnés en palliant les inconvénients de l'art antérieur.

Dans ce but, elle propose notamment un procédé de fabrication d'une couche barrière de revêtement de la face interne d'un récipient au moins en partie en matière plastique propre à contenir des produits biocompatibles avec l'homme et/ou l'animal, dans lequel

- on forme une solution contenant au moins un solvant, de l'eau, au moins un précurseur moléculaire organofonctionnel, et l'acide citrique comme catalyseur,
- on applique la solution ainsi complexée sur au moins une partie de la face interne du récipient, la solution étant en cours d'hydrolyse et condensation, et
- on sèche la solution ainsi appliquée à une température de séchage déterminée inférieure à 100°C avant évacuation et stockage, ladite couche de revêtement formant une matrice hybride organo-minérale agencée pour réaliser une barrière physico-chimique.

On notera notamment qu'avoir une bonne adhésion de la couche Sol-Gel sur la surface plastique, avec des températures aussi faibles, n'était pas véritablement connu de l'art antérieur, l'homme du métier en étant au contraire détourné.

De façon surprenante, les combinaisons ci-dessus ont néanmoins permis d'observer une excellente adhésion sur plusieurs mois/années.

Par précurseur moléculaire organofonctionnel on entend un précurseur de formule R'-M-(OR)n, R' étant la fonction organique restant dans la couche, avec au moins une liaison M-C, à l'inverse des précurseurs inorganiques de formule M(OR)n comme les matériaux à base de silices classiquement utilisés avec le procédé SOL-Gel.

Par en cours d'hydrolyse et condensation on entend le fait que la réaction chimique globale n'a pas encore atteint son degré d'avancement final ou maximal.

On sait que le taux d'avancement $\xi_r$ d'une réaction est défini par $\xi_r = \dfrac{\xi}{\xi_{max}}$ avec $\xi_r \in [0;1]$ et

$\xi$ : degré d'avancement à l'instant donné t

$\xi_{max}$ : degré d'avancement final ou maximal.

On définit par ailleurs l'avancement de la réaction par $d\xi = \dfrac{dn_i}{v_i}$ avec

$dn_i$ : variation du nombre de moles depuis l'instant initial et

$v_i$ : nombre stœchiométrique de la réaction.

En l'espèce, le taux d'avancement doit être à une valeur inférieure à 1 permettant la micro pulvérisation.

De façon alternative, par en cours d'hydrolyse et condensation, on entend donc également que la solution en cours de gélification est à l'instant t, d'une viscosité permettant une application homogène, par exemple une viscosité dynamique à 20C° comprise entre 1 et 150, par exemple entre 3 et 80, et en particulier inférieure à 50 mPa.s, par exemple inférieure à 20 mPa.s, par exemple inférieure à 10 mPa.s.

L'avancement de la réaction et la viscosité sont en effet liés.

La densité de la couche ainsi que la possibilité pour celle-ci d'être formée d'une seule surface fermée (2 dimensions) sans trous, i.e. de genre O en topologie, accroît encore la résistance au relargage de la surface interne du flacon.

Par récipient au moins en partie en matière plastique, on entend un récipient entièrement en plastique et/ou en matériau recouvert directement ou indirectement par une couche en matière plastique, la face interne étant la dernière surface exposée à l'air avant remplissage directement ou indirectement par le produit.

Par solvant on entend une substance différente de l'eau, qui a la propriété de dissoudre, de diluer ou d'extraire d'autres substances sans les modifier chimiquement et sans elle-même se modifier.

Par fabrication d'une couche barrière de revêtement de la face interne d'un récipient, on entend la fabrication d'une solution de recouvrement formant, après gélification puis solidification, une couche de matériau protecteur, présentant une réelle étanchéité (imperméabilité) à la migration des éléments venant du récipient, meilleure que celle observée avec l'art antérieur.

On constate un tel effet barrière lorsque la résistance hydrolytique lors de mesures successives est en moyenne meilleure qu'avec l'art antérieur d'au moins dix pour cent, avantageusement 30 % voire 50 % et jusqu'à 80% (et donc la capacité de relargage qui lui est proportionnelle).

Enfin la dernière étape de séchage à une température déterminée se fait avantageusement immédiatement après l'application de la solution.

Par immédiatement on entend tout de suite ou dans les quelques minutes qui suivent (< à 30 mn).

C'est cette étape de séchage qui forme définitivement la couche barrière dure selon le mode de réalisation de l'invention plus particulièrement décrit ici, et qui sera utilisée telle quelle, après stockage éventuel, pour être rempli par le produit biocompatible.

Aucune autre étape de procédé tel que chauffage ou traitement chimique n'est donc prévue après cette étape de séchage avant le remplissage.

Avec l'invention l'acide utilisé est un acide faible comme un acide extrait directement du jus de citron, ce qui présente une grande facilité d'utilisation et ce pour des prix faibles en comparaison des autres acides.

On notera ainsi qu'aucun traitement thermique ultérieur (contrairement à l'art antérieur), n'est nécessaire pour avoir une bonne qualité de couche.

En dépit du processus constant de gélification/solidification il est également possible de conserver sur le long terme le gel (solution partiellement gélifiée) produit à partir de la solution ci-dessus et de travailler à température ambiante.

Avec l'invention, on observe un relargage d'ions par le récipient très réduit après extraction avec un solvant et une identification des pics d'extraits organiques par GC-MS en comparaison avec une référence sans revêtement (GC-MS étant les initiales en langue anglo-saxonne de Gas Chromatography Mass Spectrometry).

En d'autres termes, la capacité d'un récipient, dont la face interne est sensiblement entièrement recouverte, de résister au relargage d'éléments est améliorée.

Un tel résultat est obtenu sans traitement ultérieur et dans des conditions de stockage appropriées, les mesures étant effectuées par exemple par extraction avec de l'alcool isopropyl à 40°C pendant 6h suivi d'identification des extraits volatiles par GCMS.

Avec l'invention, on constate ainsi que des relargages ultérieurs tels que testés de façon standardisée par chromatographie en phase gazeuse (GCMS) pour identifier les produits sont inférieurs à la limite de quantification (< 25 microgrammes/échantillon).

Dans des modes de réalisation avantageux, on a par ailleurs et/ou de plus recours à l'une et/ou à l'autre des dispositions suivantes :

- la température de séchage déterminée est comprise entre 70°C et 95°C. Le séchage est différent d'une cuisson en ce qu'il se fait par montée en température de façon progressive et/ou par soufflage alors que la cuisson se fait de façon « saisie » dans un four de cuisson.
- la solution contient au moins deux précurseurs moléculaires organofonctionnels ;
- les précurseurs moléculaires organofonctionnels sont pris parmi l'octadecyltrimethoxysilane, la famille des silanes dipodaux et la famille des silanes Aminopropyl.

Ceci permet d'améliorer encore la barrière fonctionnelle (suffisamment étanche pour empêcher l'extraction de la surface du matériau plastique) ainsi que son uniformité (homogénéité) et sa résistance au vieillissement. Grâce à l'action renforcée de ces précurseurs il est de plus observé une accroche renforcée adaptée au plastique, notamment et en particulier grâce aux amines et/ou silanes dipodaux.

Ainsi, dans ce mode de réalisation particulier de l'invention, on obtient une réaction véritablement efficace sans durcissement à haute température.

Avantageusement, il n'y a aucun précurseur moléculaire alkoxy métallique simple ;

- le récipient est entièrement en matière plastique ;
- le récipient est en verre dont la face interne est recouverte d'une couche plastique ;
- le solvant comprend du butoxyethanol et/ou de l'éthanol ;
- la solution comprend également au moins un pigment et/ou un colorant ;
- le pigment est pris parmi les oxydes métalliques comprenant du cobalt et du titane, les oxydes métalliques comprenant du cuivre et du chrome, les pigments photochromes et/ou le colorant est pris parmi les familles de composés comprenant le Pyrisma™ et/ou l'iriodin™ de la société MERCK, les quinacridone, les Phtalocyanine, les Chinophtalon et les composés formés d'une couche d'aluminium et/ou ses oxydes, ladite couche étant elle-même enrobée d'une couche d'oxyde de silice ;
- pour 100 unités en volume de solution finale les proportions sont de 80 à 98 unités de solvants, dont sur 100 unités de solvants au moins 90 parts d'ethanol, de 1 à 19 unités de précurseurs organofonctionnels, de 0,02 à 0,15 unités d'acide et de 0,1 à 1 unités avec ou non ajout de 1,5 à 6 grammes de pigments et/ou colorant et/ou additifs fonctionnels pour 100ml de solution finale.

Dans un mode de réalisation non conforme à l'invention, l'acide citrique peut être remplacé par un autre acide faible.

Selon les modes de réalisation de l'invention plus particulièrement décrits, les fonctions organiques comme celles des amines et/ou silanes dipodaux rendant hybride (c'est-à-dire organique et minérale) la couche de protection sont réalisées en surface, soit en contact avec le récipient (pour l'accroche), soit en contact avec le produit pour améliorer le glissement, la résistance mécanique ou encore la densité de la couche.

Le procédé selon l'invention permet d'obtenir un récipient présentant une couche barrière de revêtement sur sa face interne.

L'invention concerne également un récipient comprenant une face interne en matière plastique propre à contenir des produits biocompatibles avec l'homme et/ou l'animal, caractérisé en ce que ladite surface est recouverte sur au moins une partie d'une couche de revêtement solidifiée obtenue à partir d'une solution comprenant au moins un solvant, de l'eau, au moins un précurseur moléculaire organofonctionnel et l'acide citrique comme acide faible catalyseur, ladite couche de revêtement formant une matrice hybride organo-minérale agencée pour réaliser une barrière physico-chimique.

Avantageusement le revêtement comprend des pigments et/ou colorants.

Avec l'invention la couche étant dense et fermée (genre topologique O) ; ceci permet de résister aux attaques des solvants du produit et de bien emprisonner les additifs.

Dans un mode de réalisation avantageux le récipient est un tube repliable et/ou fermé à son extrémité (par pincement, scellement, ou repliement) (comme par exemple un tube dentifrice), en matière plastique ou revêtu d'une couche interne en matière plastique.

Egalement avantageusement le récipient est une poche en matière plastique ou revêtu d'une couche en matière plastique.

L'invention sera mieux comprise à la lecture de la description qui suit de modes de réalisation décrits ci-après à titre d'exemples non limitatifs et en référence aux figures qui l'accompagnent dans lesquelles :

La figure 1 est un organigramme montrant les étapes d'un procédé de fabrication d'une couche de revêtement selon un mode de réalisation de l'invention.
La figure 2 montre en vue partielle éclatée, un récipient selon un mode de réalisation de l'invention.
La figure 3 montre schématiquement en coupe un mode de réalisation d'un dispositif mettant en œuvre le procédé selon un mode de réalisation de l'invention appliqué à un flacon.

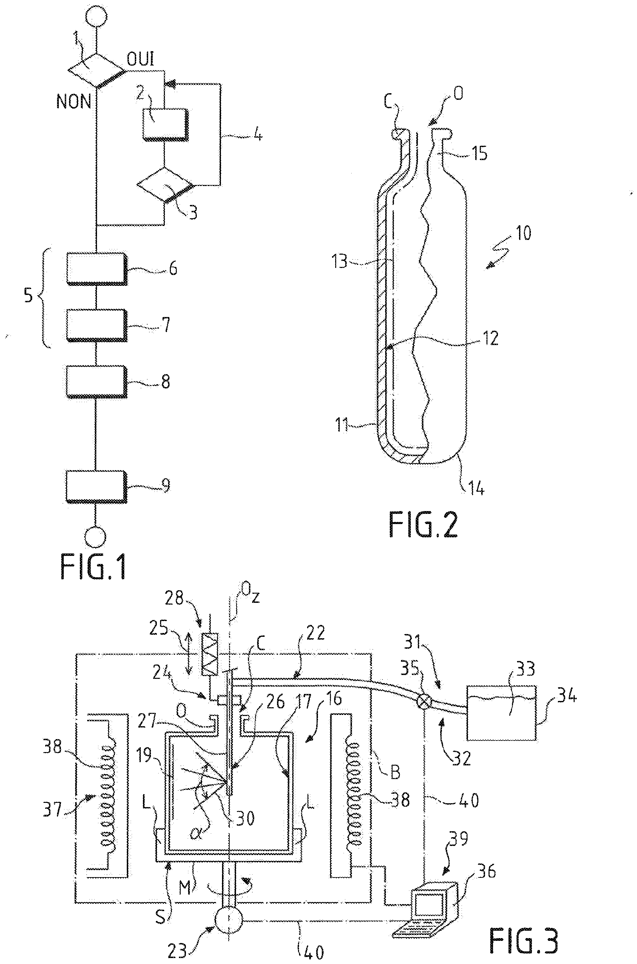

La figure 1 donne l'organigramme des principales étapes du procédé selon le mode de réalisation de l'invention plus particulièrement décrit ici.

Le procédé comporte une étape préliminaire (non représentée) d'approvisionnement en au moins un récipient ou flacon en matière plastique à traiter, par exemple du PEHD (Polyéthylène haute densité).

Le récipient est formé d'un matériau qui convenablement traité va permettre de contenir des produits biocompatibles avec l'homme et/ou l'animal c'est à dire compatibles avec une ingestion et/ou une application sur le corps humain ou animal (médicaments, produits cosmétiques...).

Le procédé comprend ensuite ou non (test 1) une étape 2 de passivation de la face interne du récipient.

Rappelons que par passivation on entend une extraction préalable à l'utilisation du flacon, des éléments susceptibles de sortir de la paroi interne du flacon pendant le contact avec un contenu liquide ou pâteux qui y seraient stocké ultérieurement.

L'extraction doit être suffisante pour que les mesures pondérales de ces éléments soient en dessous d'un seuil déterminé fixé par les normes en vigueur.

Chacun des modes de réalisation de passivation (étape 2) peut être réitéré plusieurs fois (test 3 lien 4), par exemple deux fois.

Cette étape de passivation réduit encore la quantité d'ions risquant d'être relargués par la suite dans le contenu du récipient, notamment lorsque la couche de revêtement ne recouvre pas l'intégralité ou la plus grande part de la surface interne du récipient. Elle prépare également avantageusement la face interne pour l'adhésion de la couche de revêtement.

L'étape de passivation peut également être réalisée par un traitement connu de l'homme du métier sous la dénomination plasma-atmosphérique.

Après cette étape on procède, si cela n'a pas été préalablement effectué parallèlement ou par ailleurs par exemple dans un lieu séparé et dans une période de temps avant son application qui peut atteindre plusieurs heures, une étape 5 de préparation et formation de la solution selon le mode de réalisation de l'invention plus particulièrement décrit ici.

L'étape de préparation comprend une première étape de mélange du ou des précurseur (s) avec au moins un solvant et avec l'eau acidifiée (étape 6). Le mélange s'effectue par exemple dans un bac avec agitateur à une température et pendant un temps déterminés, par exemple à une température comprise entre 10°C et 50°C, par exemple comprise entre 15°C et 35°C par exemple 24°C (température ambiante) et mélangé pendant une durée comprise par exemple entre 10 mn et 1 h, par exemple comprise par exemple entre 25 mn et 45 mn, par exemple 30 mn.

Conformément à l'invention, l'acide est de l'acide citrique.

C'est également ici qu'on ajoute le pigment, puis le mélange est passé aux ultrasons avec alternance de mélange (étape 7).

Le mélange s'effectue donc dans un liquide aqueux permettant l'hydrolyse du précurseur, et fluidifie le résultat obtenu permettant une application plus aisée.

La solution préparée in fine est de concentration en acide citrique faible, i.e. moins de 0,01 mol/l.

On applique ensuite (étape 8) la solution ou sol sur le ou les parois en matière plastique du récipient, comme cela sera décrit par exemple et plus précisément en référence au dispositif de la figure 3.

Enfin, une étape de séchage 9 est prévue, la catalyse et le séchage conduisant à obtenir une gélification qui, donne une couche solide.

Dans les modes de réalisation plus particulièrement décrits ici, le solvant est de l'éthanol.

Dans un premier mode de réalisation, le précurseur moléculaire est du 3-glycidoxypropyltrimethoxysilane.

Le Sol-Gel ainsi obtenu est d'une viscosité qui rend son application dans des récipients de formes complexes plus difficile mais permet une meilleure maîtrise du recouvrement, par exemple d'une viscosité inférieure à 1 Pa.s à température ambiante (environ 24°C) .

Dans un deuxième mode de réalisation le précurseur moléculaire est de l'octadecyltrimethoxysilane.

Dans un troisième mode de réalisation le précurseur est de (3-Aminopropyl) triethoxysilane et le catalyseur est de l'acide citrique.

On a reproduit ci-après deux exemples ayant donné d'excellents résultats avec l'invention.

Exemple 1 : Couche hybride organosilane sur pilulier en plastique avec pigments.

On mélange pendant 4h (10ml ETOH (éthanol), 0,2g de pigments chinacridone, 2ml d'octadecyltrimethoxysilane (ou octa), 400$\mu$l de BTSE dipodal, et 100$\mu$l d'Acide citrique (4g+20ml) ; séchage 80°C progressif par palier de 5°C/mn pendant 1h.

Plus précisément, dans un flacon on introduit 10ml de EtOH, 0,2g de pigments; on effectue ensuite deux passages aux ultrasons puis on introduit les 2ml d'octadecyl, les 400 $\mu$l de précurseur dipodal puis les 100$\mu$l d'acide (4g ds 20) ; puis après à nouveau passage aux ultrasons, on laisse sous agitation pendant 4h puis on applique sur le pilulier et on sèche à 80°C en montant en température à une vitesse de 5°C/m pendant 1h.

Exemple 2 : Dans un flacon de verre, on crée une couche d'accroche sur le verre formant une couche en matière plastique à partir de poudre à l'intérieur par dépôt du plastique de façon connue en elle-même, par exemple par dépôt de poudre thermoplastique.

Dans un mode de réalisation avantageux, on met également le revêtement sur le verre pour permettre une meilleure accroche de la couche de plastique à l'intérieur du flacon, en profitant des qualités d'adhérence sur le plastique du sol-gel de l'invention.

D'abord pendant 5h, on mélange (30ml d'EtOH, 600$\mu$l de (3-Aminopropyl) triethoxysilane, 60$\mu$l d'Acide (4g+20ml) avant séchage à 80°C, 5°C/mn - 1h).

Plus précisément, dans un flacon on introduit 30ml de EtOH, 600$\mu$l d'amino, 60$\mu$l d'acide (4g d'acide citrique dissous dans 20ml d'eau) et on laisse sous agitation pendant 4h.

On applique le revêtement sur le flacon et on termine par un séchage à 80°C, en montant de 5°C/mn pendant 1h.

Exemple 3

Application d'une couche de revêtement contenant une fonction antibactérienne dans un tube souple ouvert d'un côté et fermé par le futur dispenseur à vis de l'autre.

Le mélange est préparé de la façon suivante :

dans un flacon on introduit 10ml d'ethanol, 2 ml de précurseur octadecyltriméthoxysilane et 400 microlitres de silane dipodale BTSE.

On agite pendant 5 minutes puis on introduit 100 microlitres d'acide citrique (apportant l'eau et l'acide) puis 1 minute après 0,5g d'agent colloidal à base d'argent.

On mélange pendant 4h après passages aux ultrasons. Le produit est ensuite pulvérisé dans le tube et séché à 80°C pendant 1h. Le tube peut ensuite être rempli et l'extremité ouverte refermée par soudure plastique.

Avec l'invention le solvant est plutôt de l'éthanol, car il s'évapore à un point d'ébullition plus bas. De même, un des cas intéressants que l'on peut mettre en œuvre avec l'invention est l'utilisation de la couche avec (3-aminopropyl) triethoxysilane sur verre pour servir de sous couche d'accroché de poudrage thermoplastique à l'intérieur du flacon en verre (verre lui-même non compatible avec le parfum dans ce cas), et ce grâce à la fonction amine.

Ce revêtement permet de ne pas traiter la couche de verre de façon polluante grâce à ce poudrage thermoplastique.

Avec l'invention, il est possible d'accrocher un revêtement même en présence de parfums ou autre produit alcooliques, ce qui est une énorme performance en soit, révélée par un test de vieillissement en présence de parfums à 50°C pendant au moins 8 semaines sans dégradation de la couche et du produit.

Dans le cas de la sous-couche, elle permet l'accroche du produit thermoplastique 1) à T 0 lors du dépôt 2) après vieillissement à 40°C pendant 8 semaines en enceinte climatique (vide).

A titre d'exemple on a représenté ci-après (Tableau) les résultats d'aspect, de tenue au frottement du revêtement et de tenue à l'eau de Cologne (après un mois en contact avec celle-ci à 45°C) sur deux exemples 4 et 5.

Exemples 4 et 5 :

L'exemple 4 est un revêtement sol gel à base de tétraéthoxysilane classique avec 10ml d'ethanol, 4ml de TEOS, 4ml d'acide citrique (4g+20ml) et 0,2g de pigment, appliqué sur un pilulier plastique en HDPE et séché pendant 1 heure à 80°C. L'accroche initiale et l'aspect sont corrects, la tenue statique à l'eau de cologne également, par contre le revêtement résiste peu au frottement.

Mode de préparation : Dans un flacon introduire 10ml EtOH, 0,2g Pig rose quinacridone, 4 ml de TEOS, 4ml d'acide (4g ds 20) .

L'exemple 5 selon l'invention est un revêtement sur le même pilulier en HDPE qui comprend 10ml d'éthanol, 2ml d'octadecyltriméthoxysilane, 0,4ml de BTSE et 100 microlitres d'acide citrique. Après application, le revêtement est séché 1h à 80°C et donne de bons résultats.

Mode de préparation : Dans un flacon introduire 10ml de EtOH, 0,2g PIG, 2 passages aux ultrasons puis 2ml d' octadecyltriméthoxysilane, 400µl de BTSE et 100µl d'acide (4g ds 20) laisser sous agitation pendant 4h. En exemple 6, on a testé une solution hybride classique qui notamment, n'a pas accroché sur la surface, dès le contact avec la Cologne.

TABLEAU

|  | Aspect | Tenue frottement revêtement | Tenue Eau de Cologne |
|---|---|---|---|
| Exemple 4 | + |  | + |
| Exemple 5 | ++ | +++ | +++ |
| Exemple 6 | - | -- | -- |

On constate donc avec les exemples rentrant dans le cadre de l'invention, un excellent accrochage, tout en conservant un aspect satisfaisant et une bonne tenue dans le temps à l'eau de Cologne, meilleur qu'avec l'art antérieur (exemple 6).

La figure 2 montre un flacon 10 en matière plastique destiné à recevoir un produit biocompatible avec l'homme, par exemple de forme cylindrique, partiellement en coupe.

Il comprend une paroi 11 munie d'une face interne 12 susceptible d'être recouverte par le revêtement 13 (en trait mixte) selon l'invention. Par exemple sur toute la hauteur de ses parois du fond ou culot 14 du récipient, au goulot 15, formant ouverture O.

L'ouverture O du goulot 15 comprend un col C de diamètre plus petit que celui du flacon 10.

On va maintenant décrire de façon non limitative un mode de réalisation d'un dispositif permettant de mettre en œuvre l'invention en référence à la figure 3.

Dans la suite on pourra utiliser les mêmes numéros de référence pour désigner des éléments identiques ou similaires.

Plus précisément la figure 3 montre un dispositif 22 de revêtement 19 d'au moins une portion de la surface interne 17 d'un récipient 16, ici par exemple formant une fiole ou flacon cylindrique en matière plastique allongé avec un col C cylindrique, autour d'un axe Oz. Il comporte donc à l'une de ses extrémités (extrémité haute), une ouverture O en goulot, l'ouverture du goulot comprenant le col C de diamètre plus petit que celui du récipient ou flacon 16.

Le récipient forme ainsi sensiblement une enceinte.

Le dispositif comprend un support S du récipient, comprenant par exemple une mâchoire M de rétention en forme de coupelle ou de U dont les branches L enserrent le culot, c'est à dire le fond du récipient fixé par des vis latérales (non représentées).

Des moyens 23 de mise en rotation du récipient autour de son axe Oz à une vitesse V déterminée sont prévus, connus en eux-mêmes. La vitesse V peut être constante ou variable et régulée. Plus précisément les moyens comprennent par exemple une barre rotative d'entrainement du support s'étendant suivant l'axe Oz et un moteur d'entrainement de façon connue en elle-même.

Du côté du goulot du récipient 16, sont montés sur un bâti B, en traits mixtes sur la figure, des moyens 24 d'insertion/extraction (flèche 25) d'un outil ou buse 26 d'aspersion à l'intérieur du récipient.

La buse 26 comprend une tige ou tube 27 longitudinal relié à son extrémité 28 aux moyens 24 d'insertion comprenant un actionneur 23 de déplacement longitudinal tel qu'un vérin.

L'action du vérin, solidaire de la buse 26 translate celle-ci d'une position initiale extérieure au récipient 13 à une position de fonctionnement interne au récipient selon l'axe Oz.

Il permet ainsi une descente progressive continue ou par palier de l'outil d'application de la solution (gel en formation) de revêtement sur la surface interne du récipient.

La buse engendre une vaporisation 30 selon un angle solide $\alpha$ de dispersion déterminé dépendant de la pression et de la vitesse d'éjection commandée de façon connue en elle-même.

Le tube est relié, à son extrémité opposée à un système 31 de distribution d'une solution liquide de revêtement à asperger comprenant des moyens 32 d'alimentation en solution 33 liquide ou sensiblement liquide pour permettre l'aspersion, à un débit D déterminé.

Le système 31 comprend ainsi un réservoir 34 de stockage dudit liquide et des moyens 35 de circulation du liquide (pompe doseuse) agencés pour réguler le débit D du liquide via un calculateur 36 et commande également les autres actionneurs mis en œuvre dans le dispositif.

Le réservoir comprend dans son fond un moyen mélangeur par exemple un agitateur (non représenté).

Le gel de revêtement est le matériau liquide durcissable de revêtement obtenu par le procédé SOL-GEL ci-dessus décrit.

Le dispositif comprend également des moyens 37 de chauffe du récipient 13 connus en eux-mêmes permettant l'élévation de la température d'une partie de la surface interne du récipient jusqu'à un seuil de température déterminé pour le séchage.

Plus précisément l'échauffement de la surface interne s'effectue par exemple par radiation directe à partir de résistances chauffantes 38 disposées à l'extérieur du récipient ou par diffusion autour de la paroi du récipient disposée en contact par exemple avec une moufle de chauffage (non représentée).

Dans un mode de réalisation le récipient et la résistance sont sensiblement confinés dans une même enceinte de sorte à former un four pour un échauffement homogène du récipient.

Le dispositif comprend également un ordinateur ou automate 39 de commande numérique comprenant le calculateur 36.

Ceux-ci sont connectés via un bus 40 de données et de façon connue en elle-même, aux actionneurs du dispositif, à savoir à ceux de la mâchoire de rétention du récipient, c'est à dire du moteur d'actionnement en rotation, à ceux des moyens 24 d'insertion de la buse 26 dans le récipient (vérin), l'agitateur, ainsi qu'à ceux des moyens 35 de circulation/alimentation en liquide (pompe, vanne, buse) et des moyens 37 de chauffe (résistances électriques).

Le calculateur 36 est agencé pour calculer à partir des différentes consignes imposées, une loi de commande de chacun des actionneurs de façon connue en elle-même.

Comme il va de soi et comme il résulte également de ce qui précède, la présente invention n'est pas limitée aux modes de réalisation plus particulièrement décrits. Elle en embrasse au contraire toutes les variantes et notamment celles où le dispositif mettant en œuvre le procédé est différent.

L'application peut ainsi et par exemple se faire par lettrage ou tampon.

Le principe ici est d'utiliser un tampon en forme de lettre ou de motif en caoutchouc (suffisamment petit pour être introduit dans le col du flacon) nappé/trempé de SOL GEL puis introduit au bout d'une tige (robotisée/articulée dans un second temps) dans le flacon avant d'être appliqué sur la surface du verre. Le tampon est ensuite ressorti du flacon. Le SOL GEL est ensuite séché normalement comme décrit ci-avant.

L'application d'une couche réactive aux UV sur la surface interne puis exposition peut également être le procédé utilisé. On utilise alors une gélatine avec dichromate d'ammonium ou diazidostilbène par exemple comme additif supplémentaire en ajoutant des pigments réactifs dans le SOL GEL.

Les pigments réactifs sont ajoutés directement dans le SOL GEL, un négatif est collé sur la surface extérieure du flacon puis une lumière UV forte est appliquée au travers du négatif pour révéler l'image, l'excédent est lavé avant séchage.

On peut également appliquer la couche réactive comme précédemment, puis on applique le SOL GEL transparent (ou coloré) en surface interne de protection pour le produit contenu.

Un autre mode de réalisation utilise des aiguilles d'impression.

Ici le principe est le suivant :

On introduit une des valves d'impression en forme d'aiguille par le col. Le contrôle de la valve permet de faire des gouttes fines proches de la surface intérieure (type jet d'encre), donc dessiner un motif est possible en contrôlant le déplacement relatif de l'aiguille par rapport à la surface ainsi que l'éjection de la goutte. Ces aiguilles sont à mémoire de forme ; elles peuvent être incurvées pour se rapprocher des surfaces internes.

Il est également possible de réaliser des aiguilles cintrées pouvant éjecter des gouttes dans une direction souhaitée.

Ces valves (LeeCo) ont un diamètre proche de 6 mm pouvant être entièrement introduites dans la plupart des flacons. Une fois introduites, ces valves peuvent être inclinées (par exemple avec un robot) afin de pouvoir projeter plus précisément dans l'axe des buses.

Avec l'invention, et en utilisant un système de pulvérisation ainsi qu'un programme spécifique adéquat, tout en abaissant suffisamment la pression de l'air de pulvérisation, le système peut ainsi éjecter des gouttelettes de taille plus importante qu'en fonctionnement normal. Cette manipulation permet de réaliser un effet « moucheté » jamais obtenu à ce jour.

**Revendications**

1. Procédé de fabrication d'une couche barrière de revêtement (13, 19) de la face interne (12, 17) d'un récipient (10, 16) au moins en partie en matière plastique propre à contenir des produits biocompatibles avec l'homme et/ou l'animal, dans lequel

   - on forme (5) une solution contenant au moins un solvant, de l'eau, au moins un précurseur moléculaire organofonctionnel, et l'acide citrique comme catalyseur,
   - on applique (6) la solution ainsi complexée sur au moins une partie de la face interne du récipient, la solution étant en cours d'hydrolyse et condensation, et

- on sèche (7) la solution ainsi appliquée à une température de séchage déterminée inférieure à 100°C avant évacuation et stockage, ladite couche de revêtement formant une matrice hybride organo-minérale agencée pour réaliser une barrière physico-chimique.

2. Procédé selon la revendication 1, **caractérisé en ce que** la température de séchage déterminée est comprise entre 70°C et 95°C.

3. Procédé selon l'une quelconque des revendications précédentes, **caractérisé en ce que** la solution contient au moins deux précurseurs moléculaires organofonctionnels.

4. Procédé selon l'une quelconque des revendications précédentes, **caractérisé en ce que** le précurseurs moléculaire organofonctionnel est pris parmi l'octadecyltrimethoxysilane, la famille des silanes dipodaux et la famille des silanes Aminopropyl.

5. Procédé selon l'une quelconque des revendications précédentes, **caractérisé en ce que** le récipient est entièrement en matière plastique.

6. Procédé selon l'une quelconque des revendications 1 à 4, **caractérisé en ce que** le récipient est en verre dont la face interne est au moins en partie recouverte d'une couche de matière plastique.

7. Procédé selon l'une quelconque des revendications précédentes, **caractérisé en ce que** le solvant comprend du butoxyethanol et/ou de l'éthanol.

8. Procédé selon l'une quelconque des revendications précédentes, **caractérisé en ce que** la solution comprend également au moins un pigment et/ou un colorant.

9. Procédé selon la revendication 8, **caractérisé en ce que** le pigment est pris parmi les oxydes métalliques comprenant du cobalt et du titane, les oxydes métalliques comprenant du cuivre et du chrome, les pigments photochromes et/ou le colorant est pris parmi les familles de composés constituées par les quinacridone, les Phtalocyanine, les Chinophtalon et les composés formés d'une couche d'aluminium et/ou ses oxydes, ladite couche étant elle-même enrobée d'une couche d'oxyde de silice.

10. Procédé selon l'une quelconque des revendications précédentes, **caractérisé en ce que** pour 100 unités en volume de solution finale les proportions sont de 80 à 98 unités de solvants, dont sur 100 unités de solvants au moins 90 parts d'ethanol, de 1 à 19 unités de précurseurs organofonctionnels, de 0,02 à 0,15 unités d'acide et de 0,1 à 1 unités avec ou non ajout de 1,5 à 6 grammes de pigments et/ou colorant et/ou additifs fonctionnels pour 100ml de solution finale.

11. Récipient (10, 16) comprenant une surface interne (12, 17) en matière plastique et propre à contenir des produits biocompatibles avec l'homme et/ou l'animal, **caractérisé en ce que** ladite surface (12, 17) est recouverte sur au moins une partie d'une couche (13, 19) de revêtement solidifiée obtenue à partir d'une solution comprenant au moins un solvant, de l'eau, au moins un précurseur moléculaire organofonctionnel et l'acide citrique comme catalyseur, ladite couche de revêtement formant une matrice hybride organo-minérale agencée pour réaliser une barrière physico-chimique.

12. Récipient selon la revendication 11, **caractérisé en ce que** le revêtement comprend des pigments et/ou colorants.

13. Récipient selon l'une quelconque des revendications 10 et 11, **caractérisé en ce qu'**il est formé d'un tube repliable et/ou fermé à son extrémité et/ou par une poche en matière plastique ou revêtu d'une couche interne en matière plastique.

**Patentansprüche**

1. Verfahren zur Herstellung einer Sperrbeschichtung (13, 19) für die Innenfläche (12, 17) eines mindestens teilweise aus Kunststoff bestehenden Behälters (10, 16), der geeignet ist, für Mensch und/oder Tier biokompatible Produkte zu enthalten, bei dem:

- eine Lösung gebildet wird (5), die mindestens ein Lösungsmittel, Wasser, mindestens eine erste organofunktionelle molekulare Vorstufe und Zitronensäure als Katalysator enthält,
- die derart komplexierte Lösung auf mindestens einen Teil der Innenfläche des Behälters aufgetragen wird (6), wobei die Lösung in Hydrolyse und Kondensation befindlich ist, und
- die derart aufgetragene Lösung bei einer bestimmten Trocknungstem-peratur unter 100 °C getrocknet wird vor Entleerung und Lagerung,
wobei die Beschichtung eine organisch-anorganische Hybridmatrix bildet, die angeordnet ist, um eine physikalisch-chemische Sperre herzustellen.

2. Verfahren nach Anspruch 1, **dadurch gekennzeichnet, dass** die bestimmte Trocknungstemperatur zwischen 70 °C und 95 °C liegt.

3. Verfahren nach einem der vorhergehenden Ansprüche, **dadurch gekennzeichnet, dass** die Lösung mindestens zwei organofunktionelle molekulare Vorstufen enthält.

4. Verfahren nach einem der vorhergehenden Ansprüche, **dadurch gekennzeichnet, dass** die organofunktionelle molekulare Vorstufe unter Octadecyltrimethoxy-silan, aus der Gruppe der dipodalen Silane und der Gruppe der Aminopropyl-silane ausgewählt ist.

5. Verfahren nach einem der vorhergehenden Ansprüche, **dadurch gekennzeichnet, dass** der Behälter vollständig aus Kunststoff besteht.

6. Verfahren nach einem der Ansprüche 1 bis 4, **dadurch gekennzeichnet, dass** der Behälter aus Glas besteht, dessen Innenfläche mindestens teilweise mit einer Kunststoffschicht überzogen ist.

7. Verfahren nach einem der vorhergehenden Ansprüche, **dadurch gekennzeichnet, dass** das Lösungsmittel Butoxyethanol und/oder Ethanol enthält.

8. Verfahren nach einem der vorhergehenden Ansprüche, **dadurch gekennzeichnet, dass** die Lösung ferner mindestens ein Pigment und/oder einen Farbstoff enthält.

9. Verfahren nach Anspruch 8, **dadurch gekennzeichnet, dass** das Pigment unter den Metalloxiden umfassend Cobalt und Titan, den Metalloxiden umfassend Kupfer und Chrom, den photochromen Pigmenten und/oder der Farbstoff aus den Gruppen von Verbindungen umfassend die Chinacridone, die Phthalocyanine, die Chinophtalone und die Verbindungen, die durch eine Schicht aus Aluminium und/oder dessen Oxiden gebildet sind, wobei die Schicht selbst mit einer Siliciumoxidschicht umhüllt ist, ausgewählt werden.

10. Verfahren nach einem der vorhergehenden Ansprüche, **dadurch gekennzeichnet, dass** für 100 Endlösungsvolumeneinheiten die Verhältnisse 80 bis 98 Lösungsmitteleinheiten, davon für 100 Lösungsmitteleinheiten mindestens 90 Ethanolteile, 1 bis 19 Einheiten von organofunktionellen Vorstufen, 0,02 bis 0,15 Säureeinheiten und 0,1 bis 1 Einheit mit oder ohne Hinzufügung von 1,5 bis 6 Gramm Pigmenten und/oder Farbstoff und/oder funktionellen Zusätzen für 100 ml Endlösung betragen.

11. Behälter (10, 16) mit einer Innenfläche (12, 17) aus Kunststoff, geeignet, für Mensch und/oder Tier biokompatible Produkte zu enthalten, **dadurch gekennzeichnet, dass** die Fläche (12, 17) mindestens teilweise mit einer erstarrten Beschichtung (13, 19) überzogen ist, die anhand einer Lösung mit mindestens einem Lösungsmittel, Wasser, mindestens einer organofunktionellen molekularen Vorstufe und Zitronensäure als Katalysator hergestellt ist, wobei die Beschichtung eine organisch-anorganische Hybridmatrix bildet, die angeordnet ist, um eine physikalisch-chemische Sperre herzustellen.

12. Behälter nach Anspruch 11, **dadurch gekennzeichnet, dass** die Beschichtung Pigmente und/oder Farbstoffe enthält.

13. Behälter nach einem der Ansprüche 10 und 11, **dadurch gekennzeichnet, dass** er durch ein klappbares und/oder an seinem Ende verschlossenes Rohr und/oder durch eine Tasche aus Kunststoff oder eine mit einer Kunststoffinnenschicht überzogene Tasche gebildet ist.

**Claims**

1.  Method for manufacturing a barrier layer (13, 19) for coating the inner surface (12, 17) of a container (10, 16) at least partly made of plastic material and suitable for containing human- and/or animal-biocompatible products, in which

    - a solution containing at least one solvent, water, at least organofunctional molecular precursor, and citric acid as the catalyst, is formed (5),
    - the solution thus complexed is applied (6) to at least a portion of the inner surface of the container, the solution being in the process of hydrolysis and condensation, and
    - the solution thus applied is dried (7) at a given drying temperature lower than 100°C before drainage and storage, said coating layer forming a hybrid organomineral matrix arranged to produce a physicochemical barrier.

2.  Method according to claim 1, **characterised in that** the given drying temperature is between 70°C and 95°C.

3.  Method according to any one of the preceding claims, **characterised in that** the solution contains at least two organofunctional molecular precursors.

4.  Method according to any one of the preceding claims, **characterised in that** the organofunctional molecular precursor is selected from among octadecyltrimethoxysilane, the family of dipodal silanes and the family of aminopropyl silanes.

5.  Method according to any one of the preceding claims, **characterised in that** the container is wholly made of plastic material.

6.  Method according to any one of claims 1 to 4, **characterised in that** the container is made of glass, of which the inner surface is at least partly covered with a layer of plastic material.

7.  Method according to any one of the preceding claims, **characterised in that** the solvent comprises butoxyethanol and/or ethanol.

8.  Method according to any one of the preceding claims, **characterised in that** the solution also comprises at least one pigment and/or dye.

9.  Method according to claim 8, **characterised in that** the pigment is selected from among metallic oxides including cobalt and titanium, metallic oxides including copper and chromium, photochromic pigments and/or the dye is selected from families of compounds consisting of quinacridone, phthalocyanine, chinophthalone and compounds consisting of a layer of aluminium and/or oxides thereof, said layer being itself coated with a layer of silicon oxide.

10. Method according to any one of the preceding claims, **characterised in that**, to every 100 units by volume of final solution, the proportions are 80 to 98 units of solvents, including, to every 100 units of solvents, at least 90 parts of ethanol, from 1 to 19 units of organofunctional precursors, from 0.02 to 0.15 units of acid and from 0.1 to 1 units with or without addition of 1.5 to 6 grammes of pigments and/or dye and/or functional additives per 100 ml of final solution.

11. Container (10, 16) comprising an inner surface (12, 17) made of plastic material and suitable for containing human- and/or animal-biocompatible products, **characterised in that** said surface (12, 17) is covered over at least a portion with a solidified coating layer (13, 19) obtained from a solution comprising at least one solvent, water, at least one organofunctional molecular precursor and citric acid as the catalyst, said coating layer forming a hybrid organomineral matrix arranged to produce a physicochemical barrier.

12. Container according to claim 11, **characterised in that** the coating comprises pigments and/or dyes.

13. Container according to any one of claims 10 and 11, **characterised in that** it is formed from a tube foldable and/or closed at its end and/or a bag made of plastic material or covered with an internal layer of plastic material.

FIG.1

FIG.2

FIG.3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2935594